# EUROPÄISCHE PATENTSCHRIFT

(11) **EP 2 767 112 B1**
(45) Veröffentlichungstag und Bekanntmachung des Hinweises auf die Patenterteilung: **22.11.2017**
(21) Anmeldenummer: 12758448.0
(22) Anmeldetag: 05.09.2012
(51) Int. Cl.: H04W 12/08, H04L 29/06, H04W 12/12

(54) **VERFAHREN UND VORRICHTUNG ZUR KONTROLLE EINER MOBILFUNKSCHNITTSTELLE AUF MOBILEN ENDGERÄTEN**
METHOD AND DEVICE FOR MONITORING A MOBILE RADIO INTERFACE ON MOBILE TERMINALS
PROCÉDÉ ET DISPOSITIF DE CONTRÔLE D'UNE INTERFACE DE RADIOTÉLÉPHONIE MOBILE SUR DES TERMINAUX MOBILES

(30) Priorität: 14.10.2011 DE 102011054509
(43) Veröffentlichungstag der Anmeldung: 20.08.2014
(73) Patentinhaber: Deutsche Telekom AG, 53113 Bonn (DE)
(72) Erfinder: LIEBERGELD, Steffen, 10587 Berlin (DE); LANGE, Matthias, 10587 Berlin (DE); MULLINER, Collin, 10587 Berlin (DE)
(74) Vertreter: 2K Patentanwälte Blasberg Kewitz & Reichel
(86) Internationale Anmeldenummer: PCT/EP2012/067341
(87) Internationale Veröffentlichungsnummer: WO 2013/053550

(56) Entgegenhaltungen:
- US-A1- 2009 209 291
- US-B1- 7 490 350
- COLLIN MULLINER ET AL: "Taming Mr Hayes: Mitigating signaling based attacks on smartphones", DEPENDABLE SYSTEMS AND NETWORKS (DSN), 2012 42ND ANNUAL IEEE/IFIP INTERNATIONAL CONFERENCE ON, IEEE, 25. Juni 2012 (2012-06-25), Seiten 1-12, XP032220320, DOI: 10.1109/DSN.2012.6263943 ISBN: 978-1-4673-1624-8
- Collin Mulliner ET AL: "Poster: HoneyDroid -Creating a Smartphone Honeypot", , 1 May 2011 (2011-05-01), XP055299856, Retrieved from the Internet: URL:http://www.ieee-security.org/TC/SP2011 /posters/HoneyDroid__Creating_a_Smart_Phon e_Honeypot.pdf [retrieved on 2016-09-05]
- MATTHIAS LANGE ET AL: "L4Android", SECURITY AND PRIVACY IN SMARTPHONES AND MOBILE DEVICES, ACM, 2 PENN PLAZA, SUITE 701 NEW YORK NY 10121-0701 USA, 17 October 2011 (2011-10-17), pages 39-50, XP058005979, DOI: 10.1145/2046614.2046623 ISBN: 978-1-4503-1000-0

## Beschreibung

Die Erfindung betrifft ein Verfahren und eine Vorrichtung zur Kontrolle einer Mobilfunkschnittstelle auf mobilen Endgeräten, insbesondere ein virtuelles Modem zur Kontrolle von AT-Zugriffen.

### Stand der Technik:

In den vergangenen Jahren wurde viel unternommen, um Smartphone-Betriebssysteme sicherer zu machen. Ziel hierbei ist es, den Nutzer vor Angriffen und Schadsoftware (Trojaner, Computerviren) zu schützen. Beispiele für solche Maßnahmen sind
- Mandatory Access Control (MAC), um Zugriffe auf sensible Ressourcen (z.B. Ortsdaten, SMS-Datenbank, Adressbuch) einschränken und kontrollieren zu können
- Data Caging
- Address Space Layout Randomization (ASLR), um die Ausnutzbarkeit von Sicherheitslücken zu erschweren.

Trotz bekannter Angriffe auf die Mobilfunknetze durch gekaperte Mobiltelefone sind bisher kaum Methoden zum Schutz der Infrastruktur der Mobilfunknetze bekannt. Der Mobilfunknetzbetreiber hat bisher nur die Möglichkeit in seinem Netz einen SMS-Filter zu installieren, um ungewünschte SMS ausfiltern zu können. Vielmehr haben diese Angriffe gezeigt, dass die aktuellen Sicherheits-Maßnahmen den Schutz des Geräts vor Angriffen verfolgen und weniger die Umgebung (Mobilfunknetzwerk) in der sie arbeiten.

US Patent 5,628,030 beschreibt ein virtuelles Modem als ein Gerät, welches mehreren gleichzeitig aktiven Kommunikationsanwendungen einen Kommunikationskanal zur Verfügung stellt. Das virtuelle Modem verbindet dann selektiv die Kommunikationsanwendung mit dem physischen Modem. Das virtuelle Modem implementiert eine abstrakte Modemschnittstelle.

Im Gegensatz hierzu offenbart die vorliegende Erfindung keine Methode zum Multiplexen eines physischen Modems, sondern eine Methode, mit der der Zugriff eines mobilen Endgeräts auf ein Mobilfunknetzwerk auf dem mobilen Endgerät in sicherer Art und Weise kontrolliert werden kann. Das US Patent 5,628,030 bezieht sich desweiteren nur auf Desktop-Computer.

DE 000069925732 T2 beschreibt ein Mobiltelefon mit eingebauter Sicherheitsfirmware. Es wird eine Methode beschrieben, mit der sicher über ungesicherte Netzwerke auf ein Intranet zugegriffen werden kann. Die Sicherheitsschicht wird dabei auf dem Mobiltelefon in Form einer Firmware, oder eines externen Hardwaremoduls realisiert.

Die US 7 490 350 zeigt eine integrierte hardware/software Firewall, die ein zusätzlicher Sicherheitslevel ist, der zwischengeschaltet ist.

Die US 2009/0209291 zeigt ein Verfahren bei dem Verkehrsnachrichten auf der Basis von Regeln in einer Datenbank auf Zulässigkeit geprüft werden.

Aus der Druckschrift Collin Mulliner ET AL "Poster: HoneyDroid-Creating a Smartphone HoneyPot" IEEE-Security Mai 2011.

Die vorliegende Erfindung hingegen benötigt keine gesicherte Firmware oder ein externes Hardwaremodul. Zudem wird keine Methode zur Absicherung von Kommunikationsbeziehungen beschrieben.

Signalisierungsnachrichten werden durch das Mobiltelefon erzeugt und üblicherweise zum Mobile Switching Center (MSC) und Home Location Register (HLR) geschickt. Im Falle von Datenverbindungen sind noch der Serving GPRS Support Node (SGSN) und der Gateway GPRS Support Node (GGSN) beteiligt.

Daten werden im Mobilfunknetz über das sog. Packet Data Protocol (PDP) verschickt. PDP-Verbindungen aufzubauen ist ein komplexer Prozess. Zunächst sendet das mobile Endgerät eine "GPRS-Attach"-Nachricht an das SGSN. Das SGSN authentifiziert das mobile Endgerät mit Hilfe des HLR. Anschließend wird ein PDP-Kontext erzeugt und im SGSN und GGSN gespeichert. Im PDP-Kontext sind u.a. Informationen zur Abrechnung, Quality of Service und die IP Adresse dieser Verbindung gespeichert. Die Verwaltung und Vermittlung eines PDP-Kontextes über die verschiedenen Komponenten eines Mobilfunknetzwerkes ist sehr aufwändig.

Die Verbindung eines mobilen Endgeräts zum Mobilfunknetzwerk erfolgt über eine Komponente, dem sogenannten Baseband, der aus einer Vielzahl von Einzelkomponenten, wie z.B. Baseband-Prozessor, Funkmodule, Software etc. bestehen kann. Dieses Baseband enthält üblicherweise einen Standardprozessor, einen digitalen Signalprozessor (DSP) und die benötigten Radio/Funk-Komponenten für die Funkverbindung. Das Baseband und seine Komponenten, wie der Baseband-Prozessor und die darauf laufende Software, müssen, bevor sie im Mobilfunknetz eingesetzt werden können, durch unterschiedliche Institutionen zertifiziert und zugelassen werden. Dieser Prozess ist aufwändig und kostenintensiv. Daher gibt es weltweit nur wenige Hersteller von Basebands.

Üblicherweise gibt es in mobilen Endgeräten neben dem Baseband noch einen sog. Applikationsprozessor. Im Falle von Mobiltelefonen läuft auf dem Applikationsprozessor das Telefonbetriebssystem (z.B. iOS oder Android). Im Falle von sog. UMTS-Sticks ist der Applikationsprozessor der Prozessor des Computers. In jedem Fall sind Baseband und Applikationsprozessor nur an wenigen Stellen, u.a. über einen Steuerungskanal, miteinander verbunden. Über diesen Steuerungskanal kommuniziert der Applikationsprozessor mit Hilfe von Steuerkommandos, um den Baseband zu steuern.

### Übersicht über die Erfindung:

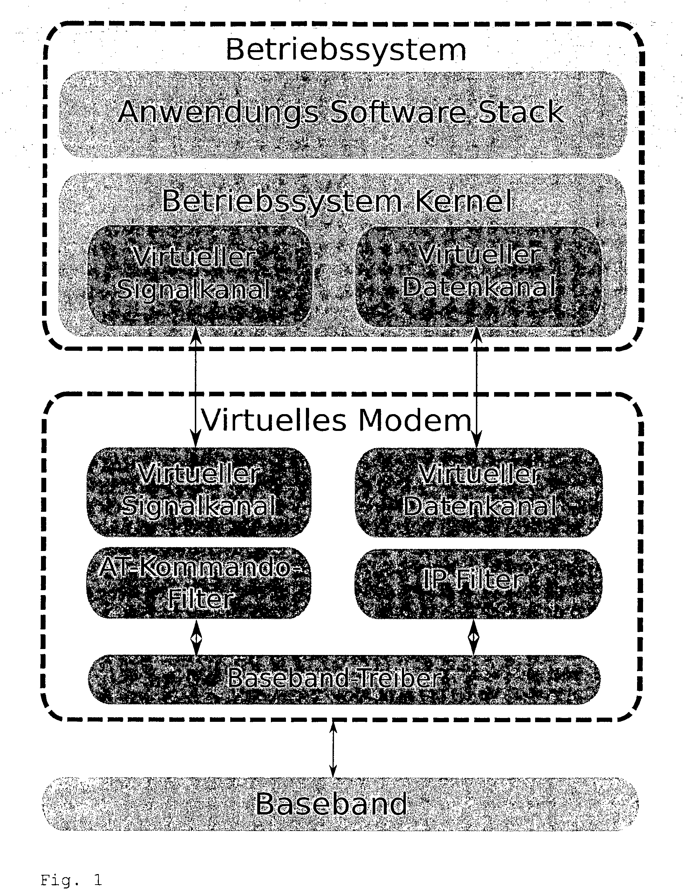

Die vorliegende Erfindung (nachfolgend virtuelles Modem genannt) zur Kontrolle des Signalisierungs-Kanals eines mobilen Endgeräts benötigt keine Änderungen an der Hardware oder der Software des Basebands. Hierzu werden die Merkmale gemäß den Ansprüchen verwendet. Das virtuelle Modem läuft vollständig auf dem Applikationsprozessor und hat exklusive Kontrolle über das Baseband. Das existierende Betriebssystem auf dem Applikationsprozessor kann nicht mehr direkt auf das Baseband zugreifen. Stattdessen bietet das virtuelle Modem dem Betriebssystem eine Schnittstelle zum Baseband an und kann damit alle Zugriffe auf das Baseband kontrollieren. Eine Darstellung dieser Architektur findet sich in Fig. 1. Die Schnittstelle besteht vorzugsweise aus zwei Kanälen, weitere Kanäle sind denkbar. Einer der Kanäle wird in einer Ausführungsform für den Steuerkommando-Strom, der zweite für den Datenstrom verwendet.

Das virtuelle Modem führt somit das ausschließlich den Datenaustausch zwischen dem Betriebssystem und dem Basisband durch, und stellt die Funktionalität des Basebands bereit, um dadurch Zugriff auf Daten zu erlangen und um dadurch unerlaubte Daten herauszufiltern.

Im Einzelnen handelt es sich um ein Verfahren zur Kontrolle einer Mobilfunkschnittstelle auf einem mobilen Endgerät, welches ein Baseband und einen Applikationsprozessor umfasst. Das Verfahren umfasst die Schritte:
- Ausführen eines Betriebssystems auf dem Applikationsprozessor. Hierbei werden Interanwendungen, wie Internet-Browser oder eine Fotokamera auf dem Applikationsprozessor ausgeführt.

Als weiteren Schritt umfasst das Verfahren, das Ausführen eines virtuellen Modems auf dem Applikationsprozessor, das ausschließlich den Datenaustausch zwischen dem Betriebssystem und dem Baseband durchführt, und die Funktionalität des Baseband bereitstellt, um dadurch Zugriff auf Daten zu erlangen und um dadurch unerlaubte Daten und Zugriffe herauszufiltern. Erfindungsgemäß stellt das virtuelle Modem einen virtuellen Signalkanal und einen virtuellen Datenkanal bereit, wobei über den virtuellen Signalkanal Steuerkommandos übermittelt werden, die das virtuelle Modem steuern. Zudem werden über den Datenkanal neben anderen Daten auch IP-Daten übertragen. Es können auch Sprachdaten als Voice-over-IP übertragen werden, die als IP-Daten übermittelt werden. Erfindungsgemäß ist ein Steuerkommando-Filter eine Komponente des virtuellen Modems, der den Steuerkommando-Strom zwischen Betriebssystem und Baseband kontrolliert und nach Vorgaben filtert.

Weiterhin ist ein IP-Filter eine Komponente des virtuellen Modems, der durch Implementierung einer Firewall unerwünschte Zugriffe von außen oder innen unterbindet.

Das virtuelle Modem stellt in Form einer abstrakten Modemschnittstelle ein Baseband bereit, in dem die Funktionalität und die Schnittstellen des Basebands bereitgestellt werden. Somit bedarf es keiner, oder nur weniger Änderungen am Betriebssystem und der Hardware. Es handelt sich bevorzugt, um eine Softwarelösung. Natürlich ist es denkbar auch eine Kombination von Hard- und Software bereitzustellen.

Zusätzlich weist das virtuelle Modem einen Baseband-Treiber auf, der eine Schnittstelle zum Baseband bereitstellt. Dieser Treiber hat einen ähnlichen oder gleichen Aufbau, wie der Treiber des Betriebssystems, der normalerweise direkt auf das Baseband zugegriffen hat. Durch diesen Treiber wird somit eine Verbindung zum Baseband-Treiber des Betriebssystems hergestellt.

Eine zentrale Komponente des virtuellen Modems ist der Steuer-Kommando-Filter. Er kontrolliert und filtert den Steuer-Kommando-Strom zwischen Betriebssystem und Baseband. Hier werden die Sicherheitsrichtlinien für den Signalisierungskanal gegenüber dem Baseband durchgesetzt.

Die IP-Filter-Komponente implementiert eine Firewall, die z.B. unerwünschte Zugriffe von außen oder innen unterbindet. Sie überwacht den durch sie hindurch laufenden Datenverkehr und entscheidet anhand festgelegter Regeln, ob bestimmte Netzwerkpakete durchgelassen werden, oder nicht. Auf diese Weise versucht sie unerlaubte Netzwerkzugriffe zu unterbinden. Die Firewall kann auf Protokoll-Ebene arbeiten, auf Port-Ebene, auf Inhaltsebene, sie kann Attacken mit bestimmten Mustern erkennen (z.B. DoS), und Stateful Inspection bereitstellen. Weiterhin sind Intrusion Dection and Prevention Systeme denkbar.

Aus Sicht des Betriebssystems verhält sich das virtuelle Modem wie ein "echtes" Baseband. Das bestehende Betriebssystem muss nicht verändert werden. Lediglich die üblichen Anpassungen für die Integration eines neuen Basebands sind nötig.

Die vorliegende Erfindung, die ein virtuelles Modem nutzt, lässt sich z.B. für folgende Anwendungen verwenden:
- Premium-SMS-Filter
- Premium-Number-Filter
- Schutz der Mobilfunk-Infrastruktur vor Signalisierungskanal-basierten DoS-Angriffen
- Unterdrückung von mobilen Botnetzen
- Aktualisierung der Zugangsrichtlinien über Fernwartung (Remote Update)
- benutzerdefinierte Spezialisierung / Aktualisierung von Zugangsrichtlinien für sog. Premium-Dienste
- unumgehbarer VPN-Zugang
- Firewall auf dem mobilen Endgerät

Das virtuelle Modem bietet die folgenden Verbesserungen gegenüber dem Stand der Technik:
- keine oder nur wenige Modifikationen am existierenden Betriebssystem nötig, je nach Implementierung;
- keine Modifikationen an der existierenden Mobil-Hardware nötig;
- Schutz des Mobilfunknetzwerks vor gekaperten mobilen Endgeräten;
- Filterung der Signalisierungsnachrichten direkt auf dem mobilen Endgerät, damit wird die Überlastung der Mobilfunknetz-Infrastruktur vermieden;
- kostengünstiger Einsatz, weil das virtuelle Modem direkt auf dem mobilen Endgerät implementiert ist, keine Änderungen an der Infrastruktur nötig;
- Unterbindung von teuren Mehrwertdiensten (sog. Premium-SMS oder Premium-Nummern)
- Kontrolle über den Datenzugang.

Die Erfindung ermöglicht somit eine
- Erfolgreiche Unterbindung eines SMS-Trojaners
- heuristische Erkennung von Command-and-Control-Kanälen über SMS
- DoS-Attacken auf die Infrastruktur des Mobilfunknetzwerkbetreibers werden aufwändiger (Erhöhung der Teilnehmer um mind. 700%)
- Reduktion der Last auf der Mobilfunk-Infrastruktur durch Ratenlimitierung kritischer Kommandos

### Figuren Beschreibung

Im Folgenden werden die Figuren kurz beschrieben.
Fig. 1 zeigt Konzept und Schichtenaufbau des virtuellen Modems;
Fig. 2 zeigt Ablaufdiagramm des prinzipiellen Verfahrens des Steuer-Kommandofilters.

### Beschreibung einer Ausführungsform:

Fig. 1 zeigt den Schichtenaufbau eines mobilen Endgeräts der vorliegenden Erfindung. Das Betriebssystem läuft auf einem Applikationsprozessor, also in der Regel einer realen Hardware, im Einzelfall kann es auch virtualisiert sein kann. Bei der Virtualisierung läuft das Betriebssystem, z.B. Android, auf einer Virtualisierungsschicht, auch Hypervisor genannt, wobei das virtuelle Modem entweder im Hypervisor als virtuelle Hardware angeordnet ist, oder auch eine virtuelle Maschine ist, die auf dem Hypervisor läuft. Das Betriebssystem umfasst einen Anwendungs-Software Stack, auf dem Anwendungen für den Benutzer laufen. Dieser Stack kann z.B. Libraries und Frameworks umfassen, die von den Anwendungen genutzt werden. Ferner bietet diese Schnittstellen zum Betriebssystem-Kernel. Innerhalb dieses Kernels werden ein virtueller Signalkanal und ein virtueller Datenkanal zu einem virtuellen Modem aufgebaut, das als Zwischenschicht zwischen dem Basisband und dem Betriebssystem geschaltet ist. Das Betriebssystem hat somit lediglich über das virtuelle Modem den Zugang zum Baseband. Über den virtuellen Signalkanal werden in der Regel Steuer-Kommandos gesendet, die dazu dienen, das virtuelle Modem zu steuern. Über den virtuellen Datenkanal werden nach Einstellung des Modems dann die Daten übermittelt, z.B. als Datenstrom. Der Datenstrom kann ein Gesprächsstrom aber auch Internetdaten (IP-Daten) umfassen. Auf den jeweiligen Datenstrom werden dann Filter (AT-Kommando-Filter und IP-Filter) angewendet, um unerlaubte oder unerwünschte Daten in beide Richtungen herauszufiltern. Die Filter sind einstellbar, und basieren auf Regeln oder Mustern, die herauszufiltern sind. So können z.B. auf den IP-Filter Scanner angewendet werden, die inhaltliche Schadsoftware erkannen, oder auch andere Inhaltsfilter, wie Protokollfilter. Innerhalb des virtuellen Modems ist ein Baseband-Treiber angeordnet, der die beiden Ströme, wenn nötig, zusammenfasst und an die Baseband/Einheit weitergibt, wie sie oben beschrieben wurde. Alternativ können die Daten jedoch auch über zwei getrennte Kanäle weitergegeben werden.

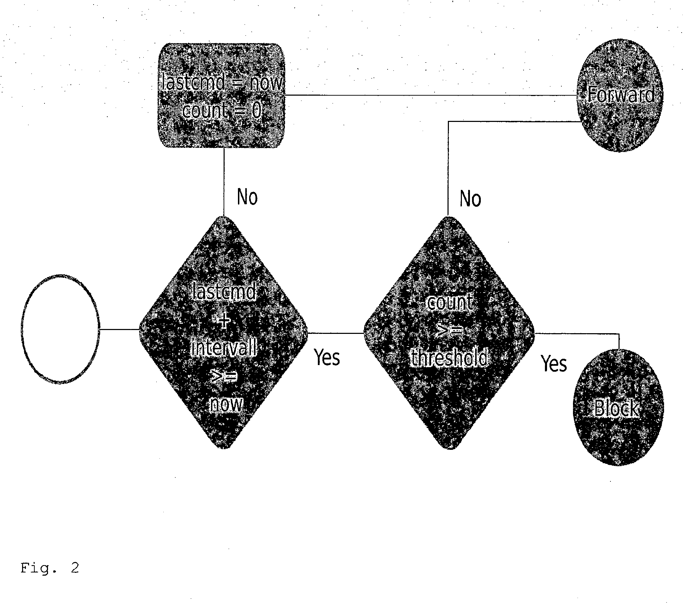

Fig. 2 zeigt ein Bespiel für eine Anwendung der vorliegenden Erfindung.

Es werden hierbei bestimmte Angriffe erkannt und herausgefiltert.

### Call-forwarding Angriff:

Viele kompromittierte Mobiltelefone ändern laufend die Einstellungen für die Anrufweiterleitung und erzeugen damit erhebliche Last in der Infrastruktur des Mobilfunknetzanbieters.

Die Anwendungssoftware erzeugt ein Kommando zur Änderung der Anrufweiterleitungseinstellungen. Dieses Kommando wird über den virtuellen Signalkanal an das virtuelle Modem übertragen. Der Steuer-Kommandofilter überprüft anhand einer einstellbaren Schwelle, ob die erlaubte Anzahl an Kommandos/Zeiteinheit für diese Funktion überschritten worden ist und blockt ggf. das Kommando bis zum Beginn des nächsten Zeitintervalls. Ist die erlaubte Anzahl noch nicht überschritten, wird das Kommando an den Baseband-Treiber geleitet und schließlich vom Baseband an das Mobilfunknetzwerk geschickt. Die Figur 2 zeigt, dass, falls der Zeitpunkt des letzten Kommandos plus einem Intervall größer als der jetzige Zeitpunkt ist, eine Überprüfung eines Zählers vorgenommen wird; und falls der Zähler oberhalb eines Grenzwertes ist, so wird die Nachricht blockiert. Andernfalls wird die Nachricht weitergeleitet.

### Premium-SMS:

SMS-Trojaner verschicken ohne Wissen des Anwenders teure Premium-SMS und können damit zu einem erheblichen wirtschaftlichen Schaden beim Anwender führen.

Der SMS-Trojaner setzt eine SMS-Nachricht an eine Premium-Nummer über den virtuellen Signalkanal ab. Der Steuer-Kommandofilter überprüft anhand einer Blacklist/Whitelist ob die SMS verschickt werden soll. Befindet sich die Nummer des Empfängers auf einer Blacklist, so kann dem Nutzer eine entsprechende Warnung angezeigt werden und ggf. eine Bestätigung des Nutzers eingefordert werden. Wird das Senden vom Nutzer abgelehnt, wird die SMS-Nachricht verworfen. Diese Listen können z.B. regelmäßig online aufgefrischt werden.

## Patentansprüche

1. Verfahren zur Kontrolle einer Mobilfunkschnittstelle auf einem mobilen Endgerät, das mobile Endgerät umfasst einen Baseband-Prozessor und einen Applikationsprozessor,
umfassend die Schritte:
- Ausführen eines Betriebssystems auf dem Applikationsprozessor;
- Ausführen eines virtuellen Modems auf dem Applikationsprozessor, wobei das virtuelle Modem ein Baseband-Prozessor emuliert, in dem die Funktionalität und die Schnittstellen des Baseband-Prozessors bereitgestellt werden, wobei das virtuelle Modem ausschließlich den Datenaustausch zwischen dem Betriebssystem und dem Basisband-Prozessor durchführt, und die Funktionalität des Baseband-Prozessor bereitstellt, um dadurch Zugriff auf unerlaubte Daten zu erlangen, um diese herauszufiltern, wobei das virtuelle Modem einen virtuellen Signalisierungskanal und virtuellen Datenkanal bereitstellt, wobei über den virtuellen Signalisierungskanal AT-Steuer-Kommandos übermittelt werden, die das virtuelle Modem steuern, und über den Datenkanal werden IP-Daten übertragen, wobei ein AT-Steuer-Kommando-Filter eine Komponente des virtuellen Modems ist, der den AT-Steuer-Kommando-Strom zwischen Betriebssystem und Baseband-Prozessor kontrolliert und nach Vorgaben filtert,
und
wobei ein IP-Filter eine Komponente des virtuellen Modems ist, der durch Implementierung einer Firewall unerwünschte Zugriffe von außen oder innen unterbindet.

2. Das Verfahren nach dem vorhergehenden Anspruch, wobei eine oder mehrere der folgenden Komponenten in den Filter eingesetzt werden, um die Daten zu filtern:
• Nummern-Filter;
• Filter zum Schutz der Mobilfunk-Infrastruktur vor Signalisierungskanal-basierten DoS-Angriffen;
• Filter zur Unterdrückung von mobilen Botnetzen
• Aktualisierungskomponente der Zugangsrichtlinien, die regelmäßigen Updates unterliegt;
• Komponente zur benutzerdefinierten Spezialisierung / Aktualisierung von Zugangsrichtlinien für sog. Premium-Dienste;
• Steuerungskomponente zur Beschränkung von VPN-Zugängen.

3. Das Verfahren nach dem vorhergehenden Anspruch, wobei das virtuelle Modem einen Baseband-Treiber aufweist, der eine Schnittstelle zum Baseband-Prozessor bereitstellt.

4. Mobiles Endgerät mit einer Mobilfunkschnittstelle umfassend:
Ein Baseband-Prozessor und einen Applikationsprozessor, wobei der Applikationsprozessor Mittel aufweist, um ein Betriebssystems auszuführen;
der Applikationsprozessor enthält weiterhin Mittel, die ein virtuelles Modem realisieren, wobei das virtuelle Modem ein Baseband-Prozessor emuliert, in dem die Funktionalität und die Schnittstellen des Baseband-Prozessors bereitgestellt werden, wobei das virtuelle Modem ausschließlich den Datenaustausch zwischen dem Betriebssystem und dem Basisband durchführt, und die Funktionalität des Baseband bereitstellt, um dadurch Zugriff auf unerlaubte Daten zu erlangen, um diese Daten herauszufiltern;
wobei das virtuelle Modem einen virtuellen Signalkanal und virtuellen Datenkanal bereitstellt, wobei über den virtuellen Signalisierungskanal AT-Steuer-Kommandos empfangbar sind, die das virtuelle Modem steuern, und über den Datenkanal sind IP-Daten übertragbar; und wobei ein AT-Steuer-Kommando-Filter eine Komponente des virtuellen Modems ist, der den AT-Steuer-Kommando-Strom zwischen Betriebssystem und Baseband kontrolliert und nach Vorgaben filtert, und
wobei ein IP-Filter eine Komponente des virtuellen Modems ist, der durch Implementierung einer Firewall unerwünschte Zugriffe von außen oder innen unterbindet.

5. Mobiles Endgerät nach dem vorhergehenden Anspruch, wobei eine oder mehrere der folgenden Komponenten in dem Filter vorhanden sind, um die Daten zu filtern:
• Nummern-Filter;
• Filter zum Schutz der Mobilfunk-Infrastruktur vor Signalisierungskanal-basierten DoS-Angriffen;
• Filter zur Unterdrückung von mobilen Botnetzen
• Aktualisierungskomponente der Zugangsrichtlinien, die regelmäßigen Updates unterliegt;
• Komponente zur benutzerdefinierten Spezialisierung / Aktualisierung von Zugangsrichtlinien für sog. Premium-Dienste;
• Steuerungskomponente zur Beschränkung von VPN-Zugängen.

6. Mobiles Endgerät nach dem vorhergehenden Anspruch, wobei das virtuelle Modem einen Baseband Treiber aufweist, der eine Schnittstelle zum Baseband bereitstellt.

## Claims

1. A method for controlling a mobile radio interface on a mobile terminal, the mobile terminal comprising a baseband processor and an application processor,
Comprising the steps of:
- executing an operating system on the application processor;
- executing a virtual modem on the application processor, the virtual modem emulating a baseband processor providing the functionality and the interfaces of the baseband processor, the virtual modem performing only the data exchange between the operating system and the baseband processor, and provides the functionality of the baseband processor to thereby gain access to unauthorized data to filter it out, wherein the virtual modem provides a virtual signaling channel and virtual data channel, wherein AT control commands are transmitted over the virtual signaling channel, controlling the modem, and IP data is transmitted over the data channel,
wherein an AT control command filter bering a component of the virtual modem which controls the AT control command flow between the operating system and the baseband processor and filters it according to specifications,
and
wherein an IP filter is a component of the virtual modem which, by implementing a firewall, prevents unwanted access from outside or inside.

2. The method according to the preceding claim, wherein one or more of the following components are employed in the filter to filter the data:
• number filter;
• filters to protect the mobile infrastructure from signaling channel-based DoS attacks;
• Filter for the suppression of mobile botnets
• updating component of access policies subject to periodic updates;
• component for customizing / updating access policies for premium services;
• Control component to restrict VPN access.

3. The method according to claim 1, wherein the virtual modem has a baseband driver that provides an interface to the baseband processor.

4. A mobile terminal having a mobile radio interface comprising:
a baseband processor and an application processor, the application processor comprising means for executing an operating system;
the application processor further includes means for implementing a virtual modem, the virtual modem emulating a baseband processor providing the functionality and the interfaces of the baseband processor, the virtual modem performing only the data exchange between the operating system and the baseband , and provides the functionality of the baseband to thereby gain access to unauthorized data to filter out said data;
the virtual modem providing a virtual signal channel and virtual data channel, wherein AT control commands which control the virtual modem can be received via the virtual signaling channel, and IP data can be transmitted via the data channel; And wherein an AT control command filter is a component of the virtual modem which controls the AT control command flow between the operating system and the baseband and filters them according to specifications,
and wherein an IP filter is a component of the virtual modem which, by implementing a firewall, prevents unwanted access from outside or inside.

5. A mobile terminal according to the preceding claim, wherein one or more of the following components are present in the filter to filter the data:
• number filter;
• filters to protect the mobile infrastructure from signaling channel-based DoS attacks;
• Filter for the suppression of mobile botnets
• updating component of access policies subject to periodic updates;
• component for customizing / updating access policies for premium services;
• Control component to restrict VPN access.

6. The mobile terminal of the preceding claim, wherein the virtual modem comprises a baseband driver providing an interface to the baseband.

## Revendications

1. Un procédé de commande d'une interface de radiocommunication mobile sur un terminal mobile, le terminal mobile comprenant un processeur de bande de base et un processeur d'application,
comprenant les étapes:
- exécuter un système d'exploitation sur le processeur d'application;
- exécuter un modem virtuel pour le processeur d'application, le modem virtuel émulant un processeur en base de base fournissant la fonctionnalité et les interfaces d'un processeur en bande de base, le modem virtuel exécutant uniquement l'échange de données entre le système d'exploitation et le processeur en bande de base, et fournit la fonctionnalité du processeur en bande de base pour obtenir ainsi un accès à des données non autorisées à filtrer en sortie, dans lequel le modem virtuel fournit un canal de signalisation virtuel et un canal de données virtuel, dans lequel des instructions de commande AT sont transmises sur le canal de signalisation virtuel, pour commander le modem, et les données IP sont transmises sur le canal de données, dans lequel un filtre d'instructions de commande AT est un composant du modem virtuel pour commander le flux d'instruction de commande AT entre le système d'exploitation et le processeur en bande de base et le filtre en fonction de spécifications,
et
dans lequel un filtre IP est un composant du modem virtuel qui, par l'implantation d'un pare-feu, empêche toute accès non autorisé de l'extérieur ou de l'intérieur.

2. Le procédé selon ta revendication précédente, dans lequel un ou plusieurs des composants suivants sont utilisés au sein du filtre pour le filtrage des données :
• un filtre des nombres;
• des filtres pour protéger l'infrastructure sans fil des attaques DoS basées sur des canaux de signalisation ;
• un filtrage pour la suppression des botnets mobiles
• un composant de mise à jour des politiques d'accès sujettes à des mises à jour périodiques ;
• un composant pour des politiques d'accès personnalisées/mises à jour pour des services Premium;
• des composants de commande pour la restriction d'accès VPN.

3. Le procédé selon la revendication 1, dans lequel le modem virtuel a un pilote en bande de base qui fournit une interface au processeur en bande de base.

4. Un terminal mobile ayant une interface radio mobile comprenant :
un processeur en base de base et un processeur d'application, le processeur d'application comprenant des moyes pour mettre en oeuvre un système d'exploitation ;
le processeur d'application comprenant e outre des moyens pour implémenter un modem virtuel, le modem virtuel émulant un processeur en base de base fournissant la fonctionnalité et les interfaces d'un processeur en bande de base, le modem virtuel exécutant uniquement l'échange de données entre le système d'exploitation et le processeur en bande de base, et fournit la fonctionnalité du processeur en bande de base pour obtenir ainsi un accès à des données non autorisées à filtrer en sortie,
le modem virtuel fournissant un canal de signalisation virtuel et un canal de données virtuel, dans lequel des instructions de commande AT commandant le modem virtuel peuvent être reçues via le canal de signalisation virtuel, et des données IP sont transmises sur le canal de données, et dans lequel un filtre d'instructions de commande AT est un composant du modem virtuel pour commander le flux d'instruction de commandes AT entre le système d'exploitation et le processeur en bande de base et le filtre en fonction de spécifications,
et
dans lequel un filtre IP est un composant du modem virtuel qui, par l'implantation d'un pare-feu, empêche toute accès non autorisé de l'extérieur ou de l'intérieur.

5. Le terminal mobile selon la revendication précédente dans lequel un ou plusieurs des composants suivants sont utilisés au sein du filtre pour le filtrage des données :
• un filtre des nombres;
• des filtres pour protéger l'infrastructure mobile des attaques DoS basées sur des canaux de signalisation ;
• un filtre pour la suppression des botnets mobiles
• un composant de mise à jour des politiques d'accès sujettes à des mises à jour périodiques ;
• un composant pour des politiques d'accès personnalisées/mises à jour pour des services Premium;
• un composant de commande pour la restriction d'accès VPN.

6. Le terminal mobile de la revendication précédente, dans lequel le modem virtuel comporte un pilote en bande de base qui fournit une interface au processeur en bande de base.
